# EUROPÄISCHE PATENTANMELDUNG

(11) **EP 1 396 643 A1**
(43) Veröffentlichungstag der Anmeldung: **10.03.2004**
(21) Anmeldenummer: 03020284.0
(22) Anmeldetag: 08.09.2003
(51) Int. Cl.: F16B 2/06, F16B 5/06

(54) **Verbindungselement zum Anschluss von Bauteilen an Rohre**

(30) Priorität: 06.09.2002 DE 20213764 U; 27.01.2003 DE 20301226 U; 22.03.2003 DE 20304606 U
(71) Anmelder: Hartmann, Rainer, Dr.-Ing., 42499 Hückeswagen (DE)
(72) Erfinder: Die Erfindernennung liegt noch nicht vor
(74) Vertreter: Füssel, Michael

(57) **Zusammenfassung**

Verbindungselement zum Anschluß von Bauteilen an Rohre, insbesondere von Haltern (2) für plattenförmige Bauelemente (17) an Rohre (1), wobei das Verbindungselement mit einem Hintergreifende in einem Durchbruch der Rohrwandung hintergreifend verankert wird und am anderen Ende über ein Gewinde verfügt, um die Bauelemente mit dem Rohr zu verspannen.

Um ein Verbindungselement für den Anschluß von Bauteilen, insbesondere von Haltern für plattenförmige Bauteile an Rohre zu schaffen, welches neben einer einfachen und kostengünstigen Montage die Ausrichtung des Halters zum Rohr innerhalb eines zumindest kleinen Winkelbereichs des Rohrumfangs erlaubt, wird vorgeschlagen, daß das Verbindungselement als hakenförmiger Zuganker (5) ausgebildet ist, der mit einem zum Rohrinnenraum gerichteten Hintergreifschenkel (6) den Durchbruch (4) hakenförmig abgewinkelt hintergreift und der an seinem anderen Schenkel ein Gewinde (7) zur Aufnahme eines Anschraubteils (9) mit korrespondierendem Gegengewinde aufweist.

## Beschreibung

Die Erfindung betrifft ein Verbindungselement für den Anschluß von Bauteilen an Rohre, insbesondere von Haltern für plattenförmige Bauteile an Rohre gemäß Oberbegriff des Hauptanspruchs.

Halter für plattenförmige Bauteile, die an Rohre angeschlossen werden, finden in vielen Anwendungsbereichen Verwendung.

In der Regel werden die Halter über Schrauben mit den Rohren verbunden. Zu diesem Zweck werden die Rohre technisch relativ aufwendig mit radial in der Rohrwandung vorgesehenen Gewindebohrungen ausgerüstet.

Diesen Nachteil umgeht der in der DE 200 00 903 U1 beschriebene an ein Rohr angeschlossene Halter für ein plattenförmiges Bauteil durch ein Verbindungselement, zu dessen Befestigung das Rohr lediglich mit einer radial zur Rohrwandung verlaufenden Bohrung ausgerüstet sein muß. Das Verbindungselement besteht aus einem dübelähnlichen Spreizelement, welches über Rastzungen verfügt. Das Verbindungselement drückt sich beim Einführen in die Bohrung zunächst zusammen und wird anschließend aufgespreizt. Dabei hintergreifen die Rastzungen die Wandung des Rohres und setzen den Halter fest.

Nachteilig bei dieser Lösung ist die Tatsache, daß die Position des Halters am Umfang des Rohres eine präzise Position der Bohrung verlangt. Bei ungenauer Position der Bohrungen in radialer Richtung der Rohre lassen sich die mit den Haltern zu befestigenden Platten nicht spannungsfrei montieren. Insbesondere bei Glasplatten kann dies zum Rutschen oder zur Zerstörung der Glasplatten führen.

Aufgabe der Erfindung ist es daher, ein Verbindungselement für den Anschluß von Bauteilen, insbesondere von Haltern für plattenförmige Bauteile an Rohre zu schaffen, welches neben einer einfachen und kostengünstigen Montage die Ausrichtung des Halters zum Rohr innerhalb eines zumindest kleinen Winkelbereichs des Rohrumfangs erlaubt.

Diese Aufgabe wird gelöst durch die Merkmale des Hauptanspruchs.

Hierzu ist das Verbindungselement als hakenförmiger Zuganker ausgebildet, der einen zum Rohrinnenraum gerichteten Hintergreifschenkel aufweist, welcher die Bohrung des Rohres hakenförmig hintergreift und der an seinem anderen Schenkel ein Gewinde zur Befestigung des Halters besitzt.

Das Verbindungselement weist daher lediglich zwei Schenkel auf, von denen einer zum Einführen in die Bohrung des Rohres dient während der zweite Schenkel, der zum ersten Schenkel hakenförmig abgewinkelt ist, ein Außen- oder Innengewinde zum Aufschrauben eines Anschraubteils aufweist. Das Anschraubteil besitzt einen zum Außen- oder Innengewinde des zweiten Schenkels korrespondierenden Gewindebereich, mit dessen Hilfe auf das Verbindungselement eine Axialkraft in Richtung des Gewindeschenkels ausgeübt wird, so daß der Halter mit Hilfe des Anschraubteils am Rohr befestigt werden kann. Der Hintergreifschenkel des Verbindungselements liegt dabei im wesentlichen koaxial zur Rohrachse an der Innenwandung des Rohres an.

Bevorzugterweise ist das Gewinde als Außengewinde ausgebildet.

Will man die Gefahr verringern, daß ein bereits in die Bohrung eingestecktes Verbindungselement in das Rohrinnere einfällt, wird zusätzlich vorgeschlagen, daß an dem das Gewinde aufweisenden Schenkel des hakenförmigen Zugankers nokkenartig ausgebildete Wölbungen angeordnet werden, die das Außendurchmaß des Gewindeschenkels so weit überragen, daß sie über den Außenrand der im Rohr angebrachten Bohrung stehen. Anstelle von einer oder mehreren Wölbungen kann auch ein vorzugsweise stramm sitzender O-Ring über den Gewindeschenkel des Zugankers geschoben sein. Hierzu wird ergänzend vorgeschlagen, daß der O-Ring entweder in einer umlaufenden separaten Nut des Gewindeschenkels sitzt oder innerhalb eines Gewindeganges im Endbereich des Außengewindes, so daß keine zusätzliche umlaufende Nut gefertigt werden muß.

In jedem Falle ist der äußere Abstand bzw. das Außendurchmaß der Einfallsicherung, unabhängig von der Frage ob es sich um Wölbungen oder einem stramm sitzenden O-Ring handelt, größer als die lichte Weite der Bohrung im Rohr, so daß das Einfallen des hakenförmigen Zugankers in die Bohrung des Rohres verhindert wird.

Bevorzugt wird eine Weiterbildung, bei welcher der Hintergreifschenkel zu dem das Gewinde tragenden Schenkel des Verbindungselements einen Winkel von größer/gleich 90 Grad aufweist.

Auf diese Weise wird auch unter Aufbringung einer großen Spannkraft durch das Anschraubteil stets eine möglichst große Auflagefläche des Hintergreifschenkels an der Innenwandung des Rohres erzielt, wobei sich der Winkel bevorzugt um die 90 Grad bewegen sollte, um ein Aufziehen der Klemmverbindung bei extrem großen Anschraubmomenten zu verhindern.

Ergänzend hierzu und der Vollständigkeit halber sollen allerdings auch Winkel von der Erfindung mit umfaßt werden, die geringfügig kleiner sind als 90 Grad, so daß der Hintergreifschenkel sich beim Anziehen des Zugankers mit seinem Einsteckende in der Rohrwandung geringfügig eingraben kann und einen sicheren Sitz an der Rohrinnenwandung erzielt.

Der besondere Vorteil der Erfindung liegt darin, daß ohne weiteres auch Halter, insbesondere Halter für Glasplatten unterschiedlicher Hersteller mit dem Zuganker befestigt werden können.

Da insoweit allerdings auch Einbauverhältnisse zu berücksichtigen sind, die die Verwendung einer normalen Sechskantmutter als Anschraubteil nicht zulassen, kommt eine besondere Weiterbildung der Erfindung zum Tragen.

Bei dieser Weiterbildung der Erfindung handelt es sich um eine Anschraubmutter, die an ihrem einen, vom Rohr weggewandten Ende, eine innenliegende Schlüsselangriffsfläche von polygonalem Querschnitt aufweist, z.B. einen Innensechskant oder Torx ® oder ähnliches.

Diese Anschraubmutter weist zudem eine zentrische Bohrung mit Innengewinde auf, die mit dem Gewinde des Zugankers korrespondiert.

Vorzugsweise ist die Außenkontur dieses Anschraubteils kreisrund um bei möglichst großer Wandstärke möglichst wenig Bauraum zu beanspruchen.

Hierfür wird ein Ausführungsbeispiel angegeben.

Ergänzend hierzu kann die Anschraubmutter an ihrem Außenumfang eine Verzahnung tragen, die mit dem Gewinde einer quer im Halter sitzenden Befestigungsschraube korrespondiert, so daß die Anschraubmutter über die Drehbewegung dieser Befestigungsschraube von außen angezogen werden kann. Auch hierfür sind Ausführungsbeispiele angegeben.

Im folgenden wird die Erfindung anhand von Ausführungsbeispielen näher erläutert.

Es zeigen:
- Fig. 1: ein über das Verbindungselement angeschlosser Halter für plattenförmige Bauelemente im Schnitt;
- Fig.2: einen Schnitt entlang der Linie A-A der Fig. 1;
- Fig.2a: ein Beispiel für eine Einfallsicherung in Form eines O-Rings;
- Fig.3: Ausführungsbeispiel für ein Anschraubteil mit innenliegender Polygonalfläche;
- Fig.3a: Ansicht des Anschraubteils von rechts;
- Fig.3b: Ansicht des Anschraubteils von links;
- Fig.4: ein Ausführungsbeispiel der Erfindung mit quer sitzendem Schraubantrieb;
- Fig.5: Ausführungsbeispiel gem. Fig.4 in Blickrichtung A-A;
- Fig.6: ein weiteres Ausführungsbeispiel der Erfindung mit keilförmiger Schraubverspannung.

Sofern im folgenden nichts anderes gesagt ist, gilt die folgende Beschreibung stets für alle Figuren.

An ein Rohr 1 ist ein bekannter Halter 2 für die Befestigung eines nicht dargestellten Bauteils angeschlossen.

Hier ist der Halter 2 als Glasplattenhalter ausgebildet. Derartige Glasplattenhalter sind zweiteilig und nehmen zwischen ihren Schenkeln eine Glasplatte auf.

Insoweit wird auf den Stand der Technik verwiesen.

Zur Befestigung des Halters 2 am Rohr 1 wird letzteres im Bereich des Halters 2 mit einer radial in der Rohrwandung 3 verlaufenden Bohrung 4 ausgerüstet.

Als Verbindungselement zwischen Halter 2 und Rohr 1 dient der erfindungsgemäße Zuganker 5.

Derartiger Zuganker weist einen Hintergreifschenkel 6 auf, der in die Bohrung 4 des Rohres 1 eingesteckt wird und sich anschließend ein Stück parallel zur Rohrwandung erstreckt, um diese zu hintergreifen.

Zum Hintergreifschenkel 6 abgewinkelt verläuft ein weiterer Schenkel des Zugankers 5, der ein Außengewinde trägt.

Die Befestigung des Halters 2 am Rohr 1 erfolgt nun, indem der Hintergreifschenkel des Zugankers 5 in die vorher angebrachte Bohrung 4 der Rohrwandung 3 eingesteckt wird. Der Zuganker durchsetzt mit seinem das Gewinde tragenden Schenkel eine entsprechende Bohrung im Fußbereich des Halters 2 und wird dort mit Hilfe des Anschraubteils 9 so verspannt, daß der Halter 2 fest an der Rohrwandung sitzt.

Damit der Zuganker 5 nicht in die Bohrung hineinfallen kann, sind Aufwölbungen 8, 8' vorgesehen, deren Außenabmessungen größer als die lichte Weite der Bohrung 4 sind, so daß der Zuganker 5, einmal eingesteckt, unter normalen Bedingungen weder herausfallen kann noch in die Bohrung hineinzufallen im Stande wäre.

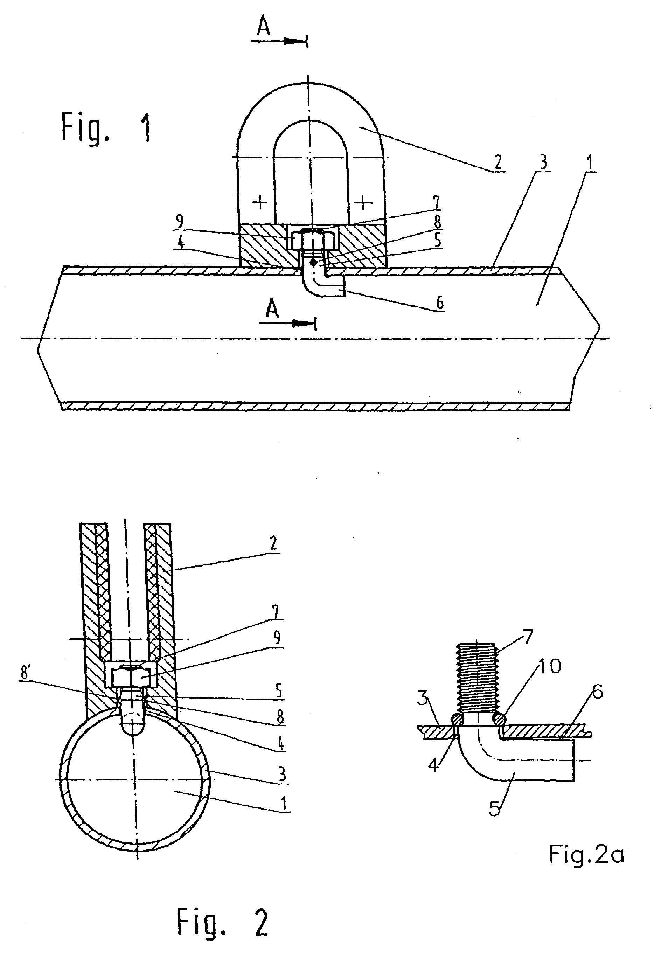

Anstelle der nockenartig ausgebildeten Wölbungen 8, 8', deren äußerer Abstand größer als die lichte Weite der Bohrung 4 ausgebildet ist, kann entsprechend Fig.2a auch ein O-Ring 10 im Zugbereich des Gewindes des Zugankers 5 sitzen, wobei der Außendurchmesser des O-Rings 10 größer als die lichte Weite der Bohrung 4 sein soll, um ein Hineinfallen des Zugankers 5 in die Bohrung 4 zu verhindern.

Unabhängig davon erfolgt die Montage des Halters 2 für beide Fälle auf dieselbe Weise.

Bei der Montage wird zunächst der Zuganker 5 mit seinem Hintergreifschenkel 6 durch die Bohrung 4 gesteckt und - wie in Bild 1 dargestellt - so plaziert, daß der Hintergreifschenkel 6 die Rohrwandung 3 hintergreift.

Dabei ist er bei der weiteren Montage durch die Wölbungen 8, 8' bzw. den O-Ring 10 so gesichert, daß er nicht unbeabsichtigt in das Rohrinnere fallen kann.

Danach wird über das freie Ende des Zugankers 5, also über denjenigen Schenkel, auf dem das Gewinde 7 sitzt, über das mit einem zum Gewinde 7 korrespondierenden Gegengewinde versehene Anschraubteil 9, der Zuganker 5 zusammen mit dem Halter 2 gegen die Außenwand des Rohres 1 verspannt.

Dabei liegt der Hintergreifschenkel im wesentlichen parallel zu den inneren Mantellinien des Rohres, so daß aufgrund der Krümmung der Rohrwandung 3 ein Mitdrehen des Zugankers 5 unterbleibt.

Es ist nun ersichtlich, daß für die Befestigung von Platten an wenigstens zwei parallelen Bohrungen 1 jeweils mehrere Halter 2 insgesamt fluchtend miteinander zu montieren sind.

Da sich Fluchtungsfehler bei der Montage bzw. der Anbringung der Bohrungen 4 nicht generell vermeiden lassen, muß jeder Halter 2 abhängig vom gewählten Bohrungsdurchmesser innerhalb eines gewissen Winkelbereichs entlang des Rohrumfangs einstellbar sein.

Dies wird dadurch erreicht, daß der Zuganker 5 mit einem geringen Spiel innerhalb der Bohrung 4 sitzt und innerhalb des Spiels ohne weiteres verschiebbar ist, ohne seine Haltefunktion zu verlieren.

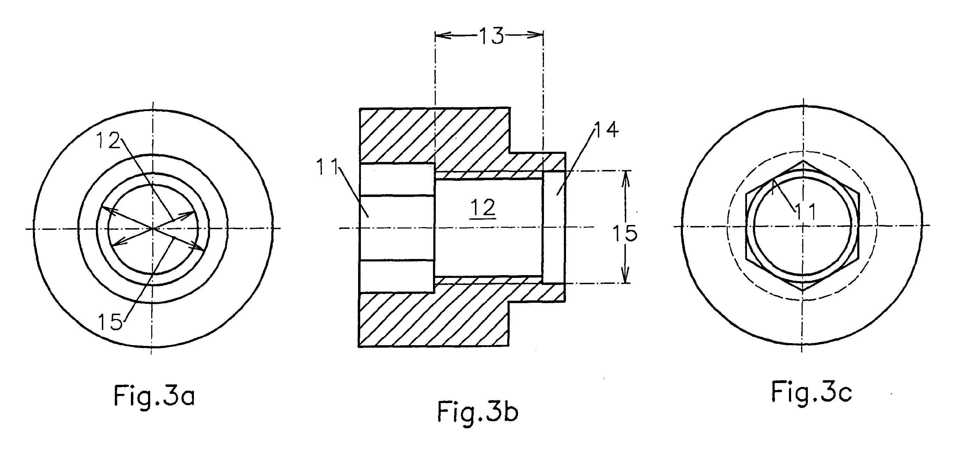

Um die Erfindung auch bei Haltern anwenden zu können, die keinen Raum für einen auf einen Außensechskantprofil aufsteckbaren Schlüssel lassen, zeigen die Figuren 3 eine Weiterbildung der Erfindung.

Hier ist das Anschraubteil 9 als eine Hülsenmutter ausgebildet, die von ihrer einen Stirnfläche her gesehen, eine innenliegende polygonale Schlüsselfläche 11 aufweist und in welche von ihrer anderen Stirnfläche her gesehen ein Innengewinde 12 eingebracht ist, welches dem Außengewinde des Zugankers 5 entspricht.

Dabei sollte die Länge 13 des Innengewindes so groß sein, daß der das Gewinde tragende Schenkel des Zugankers 5 zwar einerseits einen möglichst großen Anteil der Gewindegänge erfaßt, andererseits jedoch nicht ein hinreichend tiefes Einstecken eines Schraubenschlüssels in die polygonalen Schlüsselflächen 11 behindert. Als Montagehilfe kann zusätzlich ein Zentrieransatz 14 vorgesehen sein, dessen Außendurchmesser dem Kerndurchmesser 15 des Innengewindes 12 entspricht, so daß dieses Anschraubteil 9 zunächst einmal auf das freie Gewindeende des Zugankers 5 aufgesetzt werden kann und dort einen gewissen Halt erfährt bevor es dann angezogen wird.

Fig.3a zeigt darüber hinaus, daß der Außendurchmesser des Anschraubteils 9 kreisrund ist während Fig.3b hier eine polygonale Schlüsselfläche 11 in Form eines regelmäßigen Sechsecks zeigt.

Derartige Mutter läßt sich daher ohne weiteres mit Hilfe eines Inbusschlüssels anziehen.

Der besondere Vorteil des erfindungsgemäßen Zugankers liegt auch darin, daß er in Verbindung mit einer Befestigungsmutter entsprechend den Figuren 3 eine Verschraubung von plattenförmige Bauelementen mit an Rohren befestigten Haltern ermöglicht, wobei die Halter von außen zugängliche Stellschrauben besitzen mit deren Hilfe die Anschraubteile 9 dann angezogen werden können.

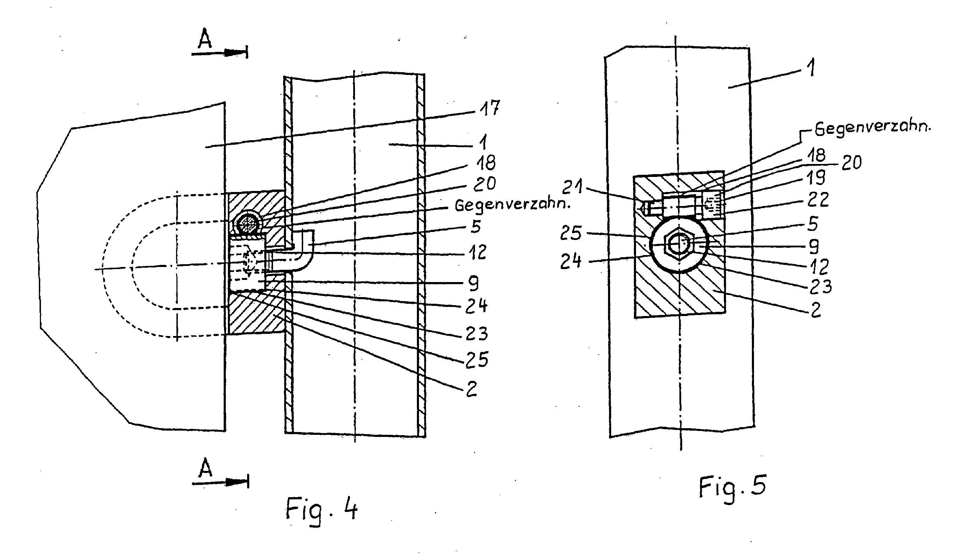

Dies ist Gegenstand der Figuren 4 bis 6.

Wesentlich ist insoweit, daß die Schrauben entsprechend Fig.3 an ihrem rundzylindrischen Außenumfang mit einer gewindeartigen Verzahnung ausgestattet sind, in welche eine im Halter 2 gelagerte Stellschraube eingreift, deren Schlüsselangriffsfläche von außen zugänglich ist und die bei entsprechender Drehung die Anschraubteile 9 in ihre Befestigungsposition verbringt.

Hierzu sind an dem Rohr 1 mit Hilfe der Zuganker 5 mehrere Halter 3 angebracht, zwischen denen ein ebenflächiges plattenförmiges Bauelement 17 eingeklemmt ist.

Es ist ersichtlich, daß sich die Halter 2 bei der Verwendung der Zuganker 5 in ihrer Stellung am Umfang des Rohres 1 verändern lassen.

Deshalb ist jeder Halter 2 über seine Mutter 9 zunächst angezogen worden, daß sich die Halter 2 beim Einbau des ebenflächigen Bauelements 17 nach diesem ausrichten können und damit im ebenflächigen Bauelement 17 keine Spannungen auftreten.

Jeder Halter 2 verfügt über eine in tangentialer Richtung zum Innengewinde 12 der Mutter 9 eingebrachte Bohrung 18, welche die Bohrung anschneidet und in der eine mit einem Innensechskant 19 ausgerüstete Zylinderschraube 20 plaziert ist.

Die Zylinderschraube 20 ist an ihrem gewindeseitigen Ende mit einem Führungszapfen 21 ausgerüstet und wird über den Führungszapfen 21 und ihren Schraubenkopf 22 im Halter 2 gelagert.

Die Mutter 9 ist im Querschnitt kreisförmig und weist an ihrem äußeren Umfang 23 eine in axialer Richtung verlaufende Verzahnung 24 auf. Im Bereich der Mutter 9 ist der Halter 2 mit einer zylindrischen Ausnehmung 25 versehen, so daß die Mutter 9 über den Halter 2 geführt und darin gelagert ist.

Es liegt auf der Hand, daß sich unter den in Fig. 5 dargestellten geometrischen Bedingungen die Mutter 9 über die Zylinderschraube 20 nachträglich, d.h. nach erfolgtem spannungslosen Einbau des ebenflächigen Bauelements 17, festziehen läßt. Hierzu wird in die Bohrung 18 die Zylinderschraube 20 eingesteckt, deren Gewindegänge mit der Verzahnung 24 der Mutter 9 so kämmen, daß sich mit Drehung der Zylinderschraube 20 die Mutter 9 im Sinne einer festgehenden Verbindung des Halters 2 am Rohr 1 dreht. Damit wird die Voraussetzung geschaffen, das Bauelement 17 bei seiner Montage nur einmal montieren und anschließend spannungsfrei fixieren zu können.

Da die Mutter 9 und die Zylinderschraube 20 lediglich zur einmaligen Montage verwendet werden, genügt es sogar, die Verzahnung 24 der Mutter 9 durch einfaches Rändeln herzustellen und als Zylinderschraube 20 eine handelsübliche Innensechskantschraube zu verwenden.

Bei einer trotzdem eventuellen notwendigen Demontage der Halter 2 wird die Zylinderschraube 20 herausgeschraubt, der nicht dargestellte Deckel eines jeden Halters 2 abgeschraubt, das ebenflächige Bauelement 17 demontiert und anschließend mit einem Innensechskantschlüssel die Mutter 9 gelöst.

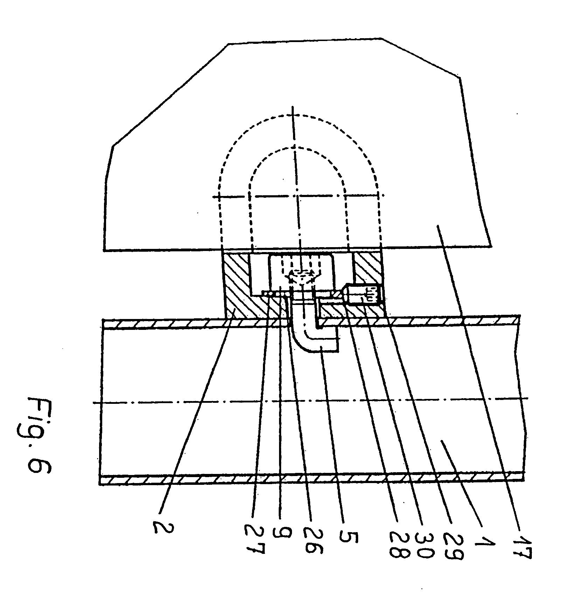

Eine weitere technische Möglichkeit zur Lösung der Aufgabenstellung, ein Befestigungselement für den Anschluß ebenflächiger Bauelemente an Rohren zu entwickeln, dessen Position am Rohr unter der Voraussetzung montierter ebenflächiger Bauelemente korrigiert werden kann, ist in Fig.6 dargestellt.

Dabei geht es vor allem darum, anstelle einer Zylinderschraube 20 mit entsprechendem Gewinde 15 die Axialspannung im Zuganker 5 auf andere Weise zu erzielen.

Hierzu wird der in Fig.6 gezeigte Halter 2, der das ebenflächige Bauelement 17 klemmt, mit einem nicht dargestellte Deckel versehen. Der Deckel ist weggelassen um die Spannvorrichtung zu zeigen.

Das Bauelement 17 wird in bekannter Weise eingebaut, wobei in diesem Fall unter die Mutter 9 ein keilförmiges und mit einem Langloch 26 versehenes Unterlegblech moniert wird.

Anschließend wird die Mutter 9 leicht angezogen.

Der keilförmige Rücken 28 des Unterlegblechs 27 weist dabei in Richtung zu einer am Halter 2 vorgesehenen Gewindebohrung 29, in welche ein Gewindestift 30 eingeschraubt ist.

Nach dem Einbau des ebenflächigen Bauelements 17 wird über den Gewindestift 30 das keilförmige Unterlegblech 27 in seiner Lage verschoben und damit zwischen die Unterseite der Mutter 9 und dem Fußbereich des Halters 2 eingetrieben.

Auf diese Weise wird der Halter 2 gegen die Oberfläche des Rohres 1 gespannt.

Unter der Voraussetzung, daß die Fußfläche des Halters 2, auf welcher sich das keilförmige Unterlegblech 27 abstützt, ebenfalls den Keilwinkel des keilförmigen Unterlegblechs 27 besitzt, liegt die Mutter 9 vollfächig am keilförmigen Unterlegblech 27 an.

Natürlich ist es auch möglich, seitlich am Halter 2 einen Durchbruch für die Montage eines keilförmigen Unterlegblechs 27 vorzusehen.

In diesem Fall müßte das Unterlegblech 27 U-förmig ausgebildet und im Bereich des Durchbruchs die Gewindebohrung 29 und der Gewindestift 30 vorgesehen sein.
Insoweit betrifft die Erfindung auch die Verspannung von Haltern zum Befestigen ebenflächiger Bauelemente an Rohrkonstruktionen mittels der erfindungsgemäßen Zuganker, deren Endpositionen auch unter der Voraussetzung bereits eingebauter ebenflächiger Bauelemente korrigierbar sind.

Hierzu muß am Halter eine in tangentialer Richtung zum Gewinde der Mutter eingebrachte Bohrung vorgesehen sein, innerhalb der ein die Mutter über deren äußere Kontur verdrehbares Stellglied gelagert ist.

Zweckmäßigerweise weist hierzu die Mutter in radialer Richtung eine kreisförmige äußere Kontur auf und ist an dieser äußeren Kontur mit einer in axialer Richtung verlaufenden Verzahnung ausgerüstet.

Vorteilhafterweise weist das Stellelement im Bereich der Mutter einen kreisförmigen Querschnitt auf und ist an seiner im Bereich der Mutter gelegenen äußeren Kontur mit einer gewindeähnlichen Verzahnung ausgerüstet.

Die Steigung der gewindeähnlichen Verzahnung des Stellelements entspricht in etwa den Abständen der Zähne der auf der Mutter vorhandenen Verzahnung.

Das Stellelement ist an seinen äußeren Enden als unverzahnter Bolzen gefertigt und weist in Bezug auf die gewindeähnliche Verzahnung an einem Ende einen größeren, mit einem Innensechskant ausgerüsteten Durchmesser und am anderen Ende einen kleineren Durchmesser auf.

Das Stellelement ist über den in Bezug auf die gewindeähnliche Verzahnung größeren und kleineren Durchmesser im Befestigungselement gelagert.

Die Mutter verfügt über einen sich an ihr Innengewinde anschließenden Innensechskant, wobei das Innengewinde kleiner als die Schlüsselweite des Innensechskants gefertigt ist.

Der Halter weist im Bereich der Mutter eine zylindrisch gefertigte Senkung auf. Die Mutter ist über die Senkung im Halter gelagert. Alternativ kann der Halter zumindest einen im Bereich der Mutter angeordneten Durchbruch aufweisen, welcher die äußere Kontur des Halters zur Mutter verbindet, so daß zwischen dem Boden der Mutter und dem gegenüber liegenden Fuß des Halters ein über den Durchbruch von außen zugängliches keilförmiges Unterlegblech einschiebbar ist.

Hierzu ist ergänzend vorgesehen, im Bereich des Durchbruchs eine in Richtung des Keils verlaufende Gewindebohrung vorzusehen, in welcher ein sich am Keilrücken abstützender Gewindestifts sitzt, so daß mit Anzug des Gewindestifts das keilförmige Unterlegblech in die Spannstellung verlagerbar ist.

### Bezugszeichenaufstellung

- 1: Rohr
- 2: Halter
- 3: Rohrwandung
- 4: Bohrung
- 5: Zuganker
- 6: Hintergreifschenkel
- 7: Außengewinde
- 8,8': Wölbung
- 9: Anschraubteil
- 10: O-Ring
- 11: polygonale Schlüsselfläche
- 12: Innengewinde
- 13: Länge des Innengewindes
- 14: Zentrieransatz
- 15: Kerndurchmesser des Innengewindes
- 16: umlaufende Nut
- 17: Bauelement
- 18: Bohrung
- 19: Innensechskant
- 20: Zylinderschraube
- 21: Führungszapfen
- 22: Schraubenkopf
- 23: Außenumfang
- 24: Verzahnung
- 25: zylindrische Ausnehmung
- 26: Langloch
- 27: Unterlegblech
- 28: Rücken
- 29: Gewindebohrung
- 30: Gewindestift

## Patentansprüche

1. Verbindungselement zum Anschluß von Bauteilen an Rohre, insbesondere von Haltern (2) für plattenförmige Bauelemente (17) an Rohre (1), wobei das Verbindungselement mit einem Hintergreifende in einem Durchbruch der Rohrwandung hintergreifend verankert wird und am anderen Ende über ein Gewinde verfügt, um die Bauelemente mit dem Rohr zu verspannen, **dadurch gekennzeichnet, daß** das Verbindungselement als hakenförmiger Zuganker (5) ausgebildet ist, der mit einem zum Rohrinnenraum gerichteten Hintergreifschenkel (6) den Durchbruch (4) hakenförmig abgewinkelt hintergreift und der an seinem anderen Schenkel ein Gewinde (7) zur Aufnahme eines Anschraubteils (9) mit korrespondierendem Gegengewinde aufweist.

2. Verbindungselement nach Anspruch 1, **dadurch gekennzeichnet, daß** das Gewinde (7) als Außengewinde ausgebildet ist.

3. Verbindungselement nach Anspruch 1 oder 2, **dadurch gekennzeichnet, daß** das Verbindungselement (5) an seinem das Gewinde (7) aufweisenden Schenkel wenigstens einen Vorsprung (8,8',10) aufweist, dessen Außenabmessungen die lichte Weite des Durchbruchs (4) zum Einstecken des nicht gewindetragenden Schenkels so weit überragen, daß ein Einfallen des Zugankers (5) verhindert wird.

4. Verbindungselement nach Anspruch 3, **dadurch gekennzeichnet, daß** der Vorsprung von zumindest einer nockenartig ausgebildeten, vorzugsweise von zwei gegenüberliegend zueinander und seitlich zum hakenförmig abgewinkelten Hintergreifschenkel (6) des Verbindungselements angeordnete Wölbung(en) (8,8' ) gebildet wird.

5. Verbindungselement nach Anspruch 3, dadurch ge ke nn**zeichnet,** daß der Vorsprung von einem separaten umlaufenden Ring am Ende des Gewindes zum Hintergreifschenkel gebildet wird.

6. Verbindungselement nach Anspruch 5, **dadurch gekennzeichnet, daß** der Ring ein stramm sitzender O-Ring ist.

7. Verbindungselement nach Anspruch 1, **dadurch gekennzeichnet, daß** der Hintergreifschenkel (6) des Verbindungselements zu dem das Gewinde tragenden Ende einen Winkel von im wesentlichen 90 Grad aufweist.

8. Verbindungselement nach Anspruch 1, **dadurch gekennzeichnet, daß** das Anschraubteil (9) als Sechskantmutter ausgebildet ist.

9. Verbindungselement nach Anspruch 1, **dadurch gekennzeichnet, daß** das Anschraubteil (9) einen kreisförmigen äußeren Querschnitt aufweist und mit einer polygonalen Schlüsselangriffsfläche (11) ausgerüstet ist, die von einem Ende in das Anschraubteil (9) eingebracht ist, während von dem anderen Ende ein Innengewinde (12) vorgesehen ist.

10. Verbindungselement nach Anspruch 9, **dadurch gekennzeichnet, daß** das Anschraubteil (9) auf seinem dem Hintergreifschenkel (6) zugewandten Ende einen Zentrieransatz (14) mit dem Kerndurchmesser des Innengewindes (12) aufweist.

11. Halter für ein ebenflächiges Bauelement, wobei der Halter über eine parallel zum ebenflächigen Bauelement angeordnete Aufnahme verfügt und an ein Rohr mit Hilfe eines Verbindungselements nach einem der Ansprüche 1 bis 10 angeschlossen wird, **dadurch gekennzeichnet, daß** zur Ausrichtung des Halters nach der Position des ebenflächigen Bauelements der Halter mit einer in tangentialer Richtung zum Innengewinde (12) der Mutter (9) eingebrachten Bohrung (18) versehen ist und daß in der Bohrung (18) ein die Mutter (9) über deren äußere Kontur verdrehbares Stellelement (20) gelagert ist.

12. Befestigungselement nach Anspruch 11, **dadurch gekennzeichnet, daß** die Mutter (9) in radialer Richtung eine kreisförmige äußere Kontur aufweist und an ihrer äußeren Kontur mit einer in axialer Richtung verlaufenden Verzahnung (24) ausgerüstet ist.

13. Halter nach Anspruch 11 oder 12, **dadurch gekennzeichnet, daß** das Stellelement (20) im Bereich der Mutter (9) einen kreisförmigen Querschnitt aufweist und an seiner im Bereich der Mutter (9) gelegenen äußeren Kontur mit einer gewindeähnlichen Verzahnung ausgerüstet ist.

14. Halter nach einem der Ansprüche 11 bis 13, **dadurch gekennzeichnet, daß** die Steigung der gewindeähnlichen Verzahnung des Stellelements (20) im wesentlichen den Zahnabständen der auf der Mutter (9) vorhandenen Verzahnung entspricht.

15. Halter nach einem der Ansprüche 11 bis 14, **dadurch gekennzeichnet, daß** das Stellelement (20) an seinen äußeren Enden als unverzahnter Bolzen gefertigt ist und in Bezug auf die gewindeähnliche Verzahnung an einem Ende einen größeren mit einem Innensechskant ausgerüsteten Durchmesser und am anderen Ende einen kleineren Durchmesser aufweist.

16. Halter nach einem der Ansprüche 11 bis 15, **dadurch ge-kennzeichnet, daß** das Stellelement (20) über den in Bezug auf die gewindeähnliche Verzahnung größeren und kleineren Durchmesser im Halter (2) gelagert ist.

17. Halter nach einem der Ansprüche 11 bis 14, **dadurch ge-kennzeichnet, daß** die Mutter (9) über einen sich an ihr Innengewinde (12) anschließenden Innensechskant (19) verfügt und das Innengewinde (12) der Mutter (9) kleiner als die Schlüsselweite des Innensechskants gefertigt ist.

18. Halter nach einem der vorangegangenen Ansprüche, **dadurch gekennzeichnet, daß** der Halter im Bereich der Mutter (9) eine zylindrisch gefertigte Senkung aufweist und daß die Mutter (9) über die Senkung im Halter (2) gelagert ist.

19. Halter für ein ebenflächiges Bauelement, wobei der Halter über eine parallel zum ebenflächigen Bauelement angeordnete Aufnahme verfügt und ein Rohr mit Hilfe eines Verbindungselements nach einem der Ansprüche 1 bis 10 angeschlossen wird, **dadurch gekennzeichnet, daß** als Befestigungselement zumindest ein im Bereich der Mutter (9) angeordneter, die äußere Kontur des Halters (2) zur Mutter (9) verbindender Durchbruch vorgesehen ist, und daß zwischen dem Fußbereich der Mutter (9) und dem Halter (2) ein über den Durchbruch von außen zugängliches keilförmiges Unterlegblech (27) vorgesehen ist.

20. Halter nach Anspruch 19, **dadurch gekennzeichnet, daß** im Bereich des Durchbruchs eine in Richtung des keilförmigen Unterlegblechs (27) verlaufende Gewindebohrung (29) und über die Gewindebohrung (29) ein sich am Keilrücken (28) abstützender Gewindestift (30) vorgesehen ist.

21. Halter nach Anspruch 19 oder 20, **dadurch gekennzeichnet, daß** der Durchbruch als Gewindebohrung (29) ausgebildet ist.
